# EUROPEAN PATENT APPLICATION

(11) **EP 2 070 569 A1**
(43) Date of publication of application: **17.06.2009**
(21) Application number: 07828589.7
(22) Date of filing: 27.09.2007
(51) Int. Cl.: A63F 9/30, A01K 63/00, A01K 77/00

(54) **SCOOPING IMPLEMENT FOR AQUARIUM FISH, ETC.**

(30) Priority: 03.10.2006 JP 2006271772
(71) Applicant: Kabushiki Kaisha Tominaga Jyushi Kogyosho, Higashiosaka-shi, Osaka 577-0025 (JP)
(72) Inventor: ARITA, Ryuzo, Sakura-shi, Chiba 2850861 (JP); TOMINAGA, Kazutoshi, Higashiosaka-shi, Osaka 5770025 (JP)
(74) Representative: Viering, Jentschura & Partner
(86) International application number: PCT/JP2007/068843
(87) International publication number: WO 2008/041611

(57) **Abstract**

A scooping implement capable of easily scooping small fish, such as, e.g., aquarium fish, kept in a display aquarium without causing any damage to the fish body is provided. A synthetic resin transparent bag 5 is detachably attached to an annular frame main body 2 having a handle 4 by holding down an opening portion of the bag 5 with an annular pressing frame 3 attached to the main body in an openable and closable manner.

## Description

### TECHNICAL FIELD

The present invention relates to a scooping implement for, e.g., aquarium fish, used for taking mainly aquarium fish, such as, e.g., goldfish or tropical fish, out of a display aquarium.

### BACKGROUND ART

In cases where aquarium fish and the like are sold at shops, typically, aquarium fish and the like kept in a large display aquarium are scooped up from the aquarium at a customer's request, moved to a transparent bag for delivery or carrying out. Then, as needed, filling up the bag with oxygen or putting an oxygen-generating agent in the bag, the bag is handed over to the customer.

A small "scooping net" called a spoon-net has been used to scoop up living animals, such as, e.g., aquarium fish, from the aforementioned large display aquarium. Examples of such a scooping net can be seen in Patent Documents 1 and 2 listed below.
Patent Document 1: Japanese Unexamined Laid-open Patent Publication No. 2004-24017
Patent Document 2: Japanese Unexamined Laid-open Patent Publication No. 2004-159616

However, the action of scooping up goldfish, tropical fish, etc., from a large display aquarium with a scoop net as described above, in actuality, comes with difficulty because it is required to chase and trap escaping fish with the net. In addition, the action may result in injury of the fish due to violent collision against the transparent wall of the aquarium or a damaged body surface of the fish due to hard scraping against the net during the capture. In any event, there were significant problems that the scooping action may awfully weaken the fish.

### DISCLOSURE OF THE INVENTION

### PROBLEMS TO BE SOLVED BY THE INVENTION

The present invention was made in view of the aforementioned problems, and aims to provide a scooping implement for, e.g., aquarium fish capable of easily scooping fish kept in a large display aquarium without causing any damage to the fish body or fatigue of the fish and also capable of being conveniently utilized by a customer when he/she brings back the scooped fish.

### MEANS TO SOLVE THE PROBLEMS

The present invention provides the following means to solve the abovementioned problems.

[1] A scooping implement for aquarium fish and the like, comprising:
an annular frame main body;
an annular pressing frame pivotally attached to the frame main body in an openable and closable manner;
a handle outwardly protruded from the annular frame main body; and
a synthetic resin transparent bag,
wherein the transparent bag is detachably attached to the frame main body by putting an opening edge portion of the transparent bag on the annular frame main body and pressing down the opening edge portion with the pressing frame.

[2] The scooping implement for aquarium fish and the like as recited in Item [1], wherein each of the annular frame main body and the pressing frame is made of a transparent colorless synthetic resin molded member.

[3] The scooping implement for aquarium fish and the like as recited in Item [1] or [2], wherein the transparent bag is made of a transparent colorless synthetic resin sheet.

[4] The scooping implement for aquarium fish and the like as recited in any one of Items [1] to [3], wherein the handle is detachably attached to the annular frame main body.

[5] The scooping implement for aquarium fish and the like as recited in any one of Items [1] to [4], wherein each of the annular frame main body and the annular pressing frame is formed into a rectangular shape as seen from the top.

### EFFECTS OF THE INVENTION

According to the scooping implement for aquarium fish and the like as recited in the aforementioned Item [1] of the present invention, in a state in which the transparent bag attached to the annular frame main body is sunk into the aquarium, when a user leads a swimming fish towards the opening of the transparent bag with an appropriate bar or scoop net, etc., the fish enters in the bag without any resistance since the bag is transparent. Then, by lifting up the handle to raise the transparent bag from the water, the fish can be scooped up from the aquarium together with the water.

Therefore, at the time of trapping fish with the scooping implement, there is no fear that the fish violently run away in the aquarium to get hurt, the net violently scrapes the captured fish, or the living animal will be weakened.

Furthermore, after scooping the fish from the aquarium as mentioned above, by removing the transparent bag from the annular frame main body by opening the annular pressing frame, the bag can be used as a bag for carrying the fish. This eliminates the displacement of the fish from a scoop net to a bag and can avoid adverse effects to the fish body due to the rapid change in water temperature.

According to the scooping implement of the present invention, aquarium fish, such as, e.g., tropical fish, in a large display aquarium can be easily scooped without causing any adverse effects to the fish body. Furthermore, the scooped fish can be handed over to a customer using the bag detached from the scooping implement as a carry out bag while keeping the fish in the bag. This eliminates displacement of the fish and can substantially reduce the labor and time at the time of purchase.

In cases where each of the annular frame main body and the annular pressing frame is transparent and colorless as recited in Item [2], and more preferably, the transparent bag is also transparent and colorless as recited in Item [3], when leading the fish in the aquarium into the transparent bag of the scooping implement, there is lesser sense of caution for the fish, thus making the trapping operation easier.

Furthermore, in cases where the handle is detachably attached as recited in Item [4], it is more convenient when storing the scooping implement not in use.

Furthermore, in cases where each of the annular frame main body and the annular pressing frame is formed into a rectangular shape as seen from the top as recited in Item [5], one side of the frame portion retaining the opening edge of the bag can be fit closely to the inner surface of the aquarium when scooping up the fish in the aquarium, which is advantageous in that the leading of the fish into the bag can be performed easily.

### BRIEF EXPLANATION OF THE DRAWINGS

[Fig. 1] Fig. 1 is a perspective view of the scooping implement in use according to one of preferred embodiments of the present invention.
[Fig. 2] Fig. 2 is a perspective view of the structural elements of the scooping implement in a detached state according to the present invention.
[Fig. 3] Fig. 3 is a vertical cross-sectional view of the scooping implement according to the present invention, wherein the transparent bag is being attached.

### DESCRIPTION OF REFERENCE NUMERALS

1...scooping implement
2...annular frame main body
3...annular pressing frame
4...handle
5...transparent bag
A...aquarium
F...fish

### BEST MODE FOR CARRYING OUT THE INVENTION

Next, one of preferred embodiments of the present invention will be explained with reference to the attached drawings.

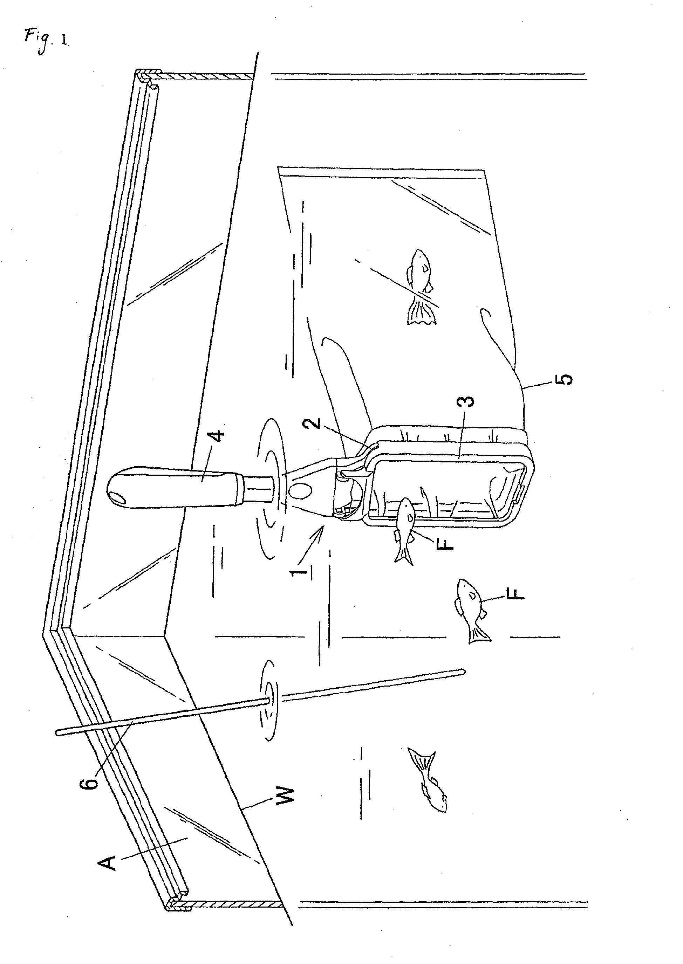

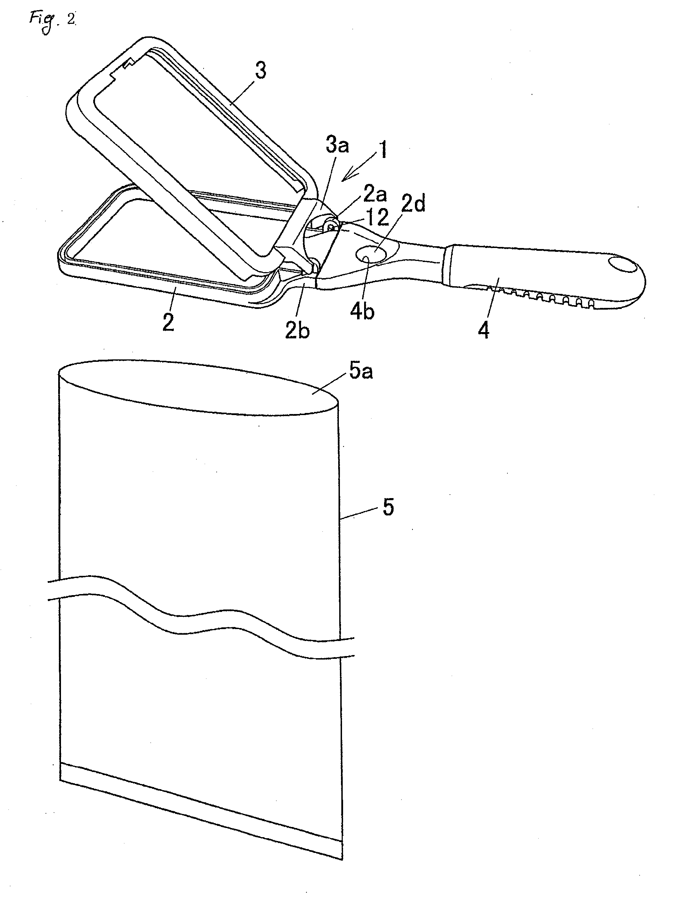

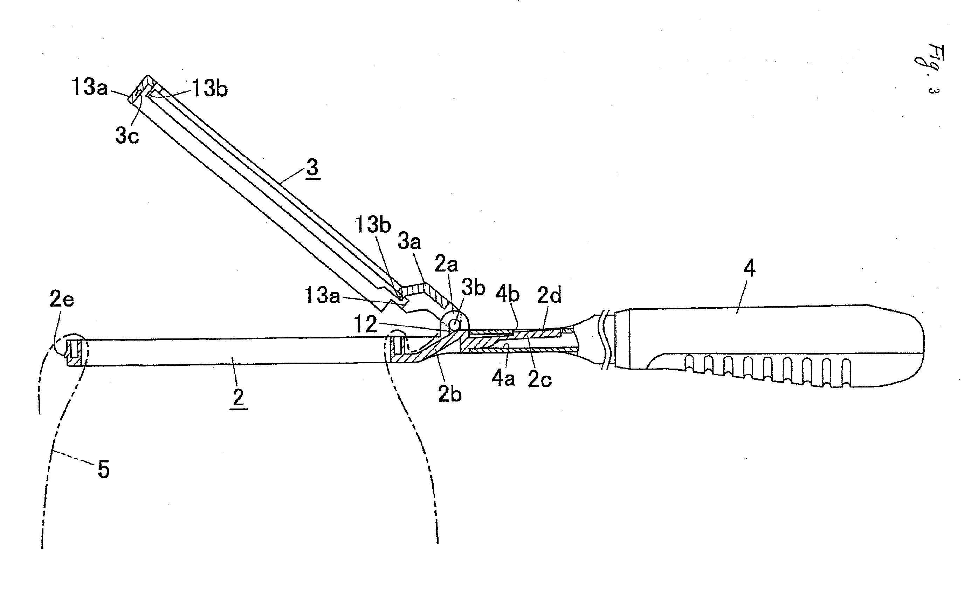

Fig. 1 is a perspective view showing a scooping implement for aquarium fish and the like in use according to the present invention. Fig. 2 is a perspective view of the structural elements thereof in a detached state, and Fig. 3 is an explanatory view showing the state in which a transparent bag is being attached.

The scooping implement 1 according to the present invention includes an annular frame main body 2 corresponding to a net frame portion of a conventional scooping net, an annular pressing frame 3 pivotably attached to the frame main body 2 in an openable and closable manner, a handle 4 outwardly protruded from the annular frame main body 2, and a non-water permeable synthetic resin transparent bag 5.

The annular frame main body 2 is made from a transparent and colorless hard synthetic resin. As shown in Fig. 2, the frame portion is formed into a generally U-shape in cross-section and has a generally rectangular shape as seen from the top. The main body can be circular or elliptical. Considering that the aquarium A for, e.g., display is generally formed into a rectangular shape, it is more advantageous that the annular frame main body 2 is also formed into a rectangular or square shape so that the frame main body 2 can be closely fitted to the inner surface of the aquarium during use.

From the outer surface of an end portion of the annular frame main body 2, a plate-like portion 2b provided with bearing portions 2a on its top is integrally extended. Furthermore, from the outer edge portion of the plate-like portion 2b, an insertion tongue 2c for connecting the handle 4 is protruded. Also, the insertion tongue 2c is provided, at its upper surface, with a circular engaging protruded portion 2d.

On the other hand, the annular pressing frame 3 is also made from a transparent and colorless hard synthetic resin. As shown in Fig. 3, the frame 3 is formed into a reversed generally U-shape in cross-section and has a generally rectangular shape corresponding to the annular frame main body 2 so that the external downwardly extending edge portion 13a can be fitted on the external side of the annular frame main body 2 and the internal relatively short downwardly extending edge portion 13b can be easily and loosely fitted in the upward groove portion of the annular frame main body 2.

This pressing frame 3 has a pivoting protruded portion 3a at a part of the outer circumference of the frame. A pair of inwardly protruded shaft portions 3b and 3b integrally formed on the tip end portions of the two-forked portion of the pivoting protruded portion 3a are fitted into shaft holes 12 of the bearing portions 2a of the annular frame main body 2, so that the pressing frame 3 is pivotally connected to the annular frame main body 2 in an openable and closable manner.

At the edge central portion opposite to the pivoting side, an engaging protruded portion 2e and an engaging dented portion 3c configured to be engaged with each other are formed. When the pressing frame 3 is closed toward the annular frame main body 2, they are engaged with each other to prevent the pressing frame 3 from opening unintentionally.

The handle 4 is a wooden or plastic bar shaped member configured to be detachably attached to the annular frame main body 2 by inserting the insertion tongue 2c of the annular frame main body 2 into a slit-like hole 4a formed at an end portion of the handle 4 and engaging the engaging protruded portion 2d with the engaging hole 4b.

The transparent bag 5 is made of a soft synthetic resin sheet, such as, e.g., a polyethylene sheet, a polypropylene sheet, and a polyvinyl chloride sheet, and is non-water permeable, transparent and colorless.

The transparent bag 5 has an opening portion 5a with a size corresponding to the size of the annular frame main body 2. The bag 5 can be firmly attached to the annular frame main body 2 by putting the opening portion 5a of the bag 5a on the annular frame main body 2 from the inside to the outside and closing the pressing frame 3 to pinch the opening portion 5a by and between the pressing frame 3 and the annular frame main body 2.

In using the scooping implement 1 according to the present invention, in the aforementioned attached state of the bag 5, gripping the handle 4 with one hand , the bag 5 is put in the water so that the bag 5 extends sideways in the aquarium A as shown in Fig. 1.

Then, if necessary, using a chasing implement 6, such as, e.g., an available bar-shaped member or a scoop, a user leads the fish F in the aquarium A towards the opening portion 5a of the transparent bag 5. Since the bag 5 is transparent and colorless, the fish will move into the transparent bag 5 without suspicion.

After confirming that one or a plurality of targeted living animals are in the bag 5, the scooping implement 1 is pulled out from the aquarium A using the handle 4. At this time, the bag is pulled out while keeping the opening of the bag facing upward and keeping an appropriate amount of water in the bag.

Subsequently, after completion of this pull out process, the pressing frame 3 is opened to remove the transparent bag 5 from the annular frame main body 2. If necessary, after filling up the bag with oxygen through the opening portion 5a or putting an oxygen generating agent in the water, the opening portion 5a is closed using a closing implement, such as, e.g., a rubber band or other appropriate implements, and the bag is handed to a customer. The customer will take home the purchased aquarium fish and the like using the transparent bag 5 as a portable or a carry-out bag, and release the fish into an aquarium at home.

This application claims priority to Japanese Patent Application No. 2006-271772 filed on October 3, 2006, the entire disclosure of which is incorporated herein by reference in its entirety.

It should be understood that the illustrated embodiment as explained above merely shows an example of preferred embodiments of the present invention, and therefore the present invention is not limited to this embodiment, and allows various modifications falling within the claimed scope of the present invention.

## Claims

1. A scooping implement for aquarium fish and the like, comprising:
an annular frame main body;
an annular pressing frame pivotally attached to the frame main body in an openable and closable manner;
a handle outwardly protruded from the annular frame main body; and
a synthetic resin transparent bag,
wherein the transparent bag is detachably attached to the frame main body by putting an opening edge portion of the transparent bag on the annular frame main body and pressing down the opening edge portion with the pressing frame.

2. The scooping implement for aquarium fish and the like as recited in claim 1, wherein each of the annular frame main body and the pressing frame is made of a transparent colorless synthetic resin molded member.

3. The scooping implement for aquarium fish and the like as recited in claim 1 or 2, wherein the transparent bag is made of a transparent colorless synthetic resin sheet.

4. The scooping implement for aquarium fish and the like as recited in any one of claims 1 to 3, wherein the handle is detachably attached to the annular frame main body.

5. The scooping implement for aquarium fish and the like as recited in any one of claims 1 to 4, wherein each of the annular frame main body and the annular pressing frame is formed into a rectangular shape as seen from the top.
